# EUROPÄISCHE PATENTSCHRIFT

(11) **EP 1 252 343 B1**
(45) Veröffentlichungstag und Bekanntmachung des Hinweises auf die Patenterteilung: **30.07.2003**
(21) Anmeldenummer: 01901010.7
(22) Anmeldetag: 18.01.2001
(51) Int. Cl.: C21C 7/00, C21B 3/06, C21C 5/36, C22B 7/04, C04B 5/06

(54) **VERFAHREN ZUM BEHANDELN VON SCHLACKEN ODER SCHLACKENGEMISCHEN AUF EINEM EISENBAD**
METHOD FOR TREATING SLAGS OR SLAG MIXTURES ON AN IRON BATH
PROCEDE DE TRAITEMENT DE LAITIERS OU DE MELANGES DE LAITIERS SUR UN BAIN DE FER

(30) Priorität: 28.01.2000 AT 200065
(43) Veröffentlichungstag der Anmeldung: 30.10.2002
(73) Patentinhaber: Holcim Ltd., 8645 Jona (CH)
(72) Erfinder: EDLINGER, Alfred, A-6780 Bartholomäberg (AT)
(74) Vertreter: Haffner, Thomas M., Dr.
(86) Internationale Anmeldenummer: AT0100010
(87) Internationale Veröffentlichungsnummer: WO01055459

(56) Entgegenhaltungen:
- WO-A-95/07365
- WO-A-97/46717
- DE-A- 2 307 237

## Beschreibung

Die Erfindung bezieht sich auf ein Verfahren zum Behandeln von Schlacken oder Schlackengemischen mit einem Eisenoxidgehalt von > 5 Gew.%, insbesondere Stahlwerksschlacken, bei welchem die Stahlschlacken gegebenenfalls mit anderen Schlacken vermischt auf ein Metallbad aufgegeben werden.

Aus der EP 666 930 B1 ist bereits ein Verfahren zum Herstellen von Stahl und hydraulisch aktiven Bindemitteln bekannt geworden, bei welchem Stahlschlacken unter Verwendung von Roheisen und insbesondere des im Roheisen vorhandenen Kohlenstoffgehaltes reduziert wurden, wodurch zum einen ein Frischen des Roheisenbades bewirkt wird und der Kohlenstoffgehalt des Bades, beispielsweise auf unter die Hälfte des im Roheisen vorhandenen Kohlenstoffgehaltes, verringert wird, wobei gleichzeitig Eisenoxyd aus der Stahlschlacke zu Eisen reduziert wird und in das Metallbad gelangt. Das bekannte Verfahren wurde hiebei im wesentlichen dahingehend optimiert, daß mit geringen Mengen an flüssigem Roheisen große Mengen an Stahlschlacken, zumindest teilweise, reduziert werden konnten. Eine wesentliche Verkürzung des Verfahrens durch Einsatz größerer Mengen an flüssigem Roheisen gelingt bei diesem bekannten Verfahren nicht ohne weiteres, wobei zum einen flüssiges Roheisen üblicherweise mit vergleichsweise geringeren Temperaturen vorliegt, wodurch die rheologischen Eigenschaften von Schlacken problematisch werden können und zum anderen bei Aufgabe von flüssigen Stahlschlacken auf große Mengen flüssigen Roheisens eine ungemein heftige Reaktion beobachtet wird, welche bei ungünstigen rheologischen Eigenschaften der Schlacken zur Ausbildung unerwünschter Schaumschlacken oder zum Auswurf der Schlacke führen kann. Die Ausbildung derartiger Schaumschlacken führt in der Folge wiederum zu einer Verlangsamung der Reaktion, sodaß relativ lange Behandlungszeiten erforderlich werden.

Die Erfindung zielt nun darauf ab ein Verfahren der eingangs genannten Art dahingehend weiterzubilden, daß bei relativ kurzer Umsetzungszeit die im Zuge des Verfahrens entstehende Prozeßwärme optimal genutzt werden kann und eine dünnflüssige Stahlschlacke während der Reduktion aufrechterhalten werden kann, welche die Ausbildung von Schaumschlacken nachhaltig behindern und gleichzeitig lokale Überreaktionen mit unerwünschtem Auswurf von flüssiger Schlacke verhindert.

Zur Lösung dieser Aufgabe besteht das erfindungsgemäße Verfahren darin, daß als Metallbad ein Stahlbad mit einem C-Gehalt von < 1,5 Gew.%, vorzugsweise < 0,5 Gew.%, eingesetzt wird und daß das Stahlbad nach der Aufgabe der Stahlschlacken auf über 2,0 Gew.% C, vorzugsweise > 2,5 Gew.% C, durch Einbringen von Kohlenstoff oder Kohlenstoffträgern aufgekohlt wird. Dadurch, daß zu Beginn der Schlackenreduktion ein Metallbad mit vergleichsweise geringerem Kohlenstoffgehalt, d.h. ein Stahlbad vorgelegt wird, werden lokale Überreaktionen und heftige Umsetzungen, bei welchen große Gasmengen gebildet werden, verhindert, sodaß die Ausbildung von Schaumschlacken nicht mehr beobachtet werden kann. Um nun ein derartiges Verfahren wirtschaftlich und weitestgehend autotherm zu führen, ist es besonders vorteilhaft, die im Verfahren entstehende Prozeßwärme unmittelbar zu nutzen. Mit Vorteil wird daher das erfindungsgemäße Verfahren so durchgeführt, daß ein Roheisenbad vorgelegt wird und mit Sauerstoff auf einen C-Gehalt von < 0,5 Gew.% gefrischt wird, wobei sich eine Badtemperatur von über 1570° C, insbesondere etwa 1620° C einstellt, daß auf das gefrischte Stahlbad flüssige Stahlschlacke aufgebracht wird und nach einem Temperaturausgleich Kohlenstoff in das Bad eingetragen wird, wobei SiO₂-hältige Korrekturstoffe, wie z.B. Hochofenschlacke, Quarzsand und/oder Al₂O₃-hältige Korrekturstoffe, wie z.B. Bauxit, zur Absenkung der Basizität auf < 1,5 bzw. zur Einstellung eines Al₂O₃-Gehaltes von > 10 Gew.% zugesetzt werden. Dadurch, daß die Ausbildung des Stahlbades, auf welches in der Folge die Stahlschlacken aufgegeben werden, unmittelbar als Vorstufe innerhalb des gleichen Verfahrens durch einen Frischvorgang erzielt wird, kann die beim Frischen entstehende Prozeßwärme, bei welcher das ursprüngliche Roheisenbad wesentlich aufgeheizt wird, unmittelbar für einen Temperaturausgleich mit der aufzubringenden Stahlschlacke genützt werden, wobei aufgrund der hohen Temperatur auch Korrekturstoffe, und insbesondere SiO₂-hältige Korrekturstoffe, wie sie für die Einstellung der gewünschten Basizität erforderlich sind, unmittelbar aufgeschmolzen und in die Schlacke eingetragen werden können. Auf das entsprechend auf Temperaturen von über 1570° C durch den Frischvorgang erhitzte Stahlbad wird somit entweder unmittelbar zumindest ein Teil der für die Einstellung der Basizität erforderlichen SiO₂-hältigen Korrekturstoffe aufgebracht, sodaß diese Korrekturstoffe erhitzt und zumindest teilweise geschmolzen werden, oder unmittelbar die Stahlschlacke aufgebracht, wobei gemeinsam mit der flüssigen Stahlschlacke die SiO₂-hältigen Korrekturstoffe zugesetzt werden können. Durch den Zusatz derartiger SiO₂-hältigen Korrekturstoffe und insbesondere durch die Möglichkeit hier gleichzeitig Additive, wie beispielsweise Kühlschrott oder Feinerz aufzubringen, wird die hohe latente Wärme des gefrischten Stahlbades unmittelbar im Prozeß genützt und es kann durch Zusatz von Eisenoxydträgern eine effiziente Steuerung der Temperatur vorgenommen werden, bei welcher gleichzeitig Eisenoxyde weitestgehend reduziert werden und somit aus derartigen Eisenoxydträgern, welche üblicherweise nur schwer aufgearbeitet werden können, wie beispielsweise Feinerzen, eine hohe Menge an flüssigem Eisen gebildet wird.

Im Anschluß an das Aufbringen der Stahlschlacken erfolgt nun die kontinuierliche Anhebung des Kohlenstoffgehaltes des Stahlbades und die gewünschte Reduktionsarbeit, wobei Kohlenstoffträger in das Stahlbad eingeblasen werden. Das gebildete Kohlenmonoxyd kann in der Folge nachverbrannt werden, sodaß der Prozeß insgesamt weitestgehend autotherm geführt werden kann und auf zusätzliches Energieeinbringen verzichtet werden kann. Mit Vorteil wird das erfindungsgemäße Verfahren hiebei so durchgeführt, daß die Basizität auf 1,1 bis 1,4 und der C-Gehalt des Bades auf > 2,5 Gew.% eingestellt wird.

Das erfindungsgemäße Verfahren wird mit Vorteil so durchgeführt, daß die Stahlschlacke dem Stahlbad in einem Gewichtsmengenverhältnis von 1 : 3 bis 1 : 6, vorzugsweise etwa 1 : 4 zugesetzt wird, wobei mit der relativ hohen Menge an vorgelegtem Metallbad, welches sich nach dem Frischvorgang auf hohem Temperaturniveau befindet, die erforderliche Schmelzwärme für Zuschlagstoffe unmittelbar bereitgestellt werden kann. Insbesondere kann hiebei mit Vorteil Quarzsand in Mengen von 150 bis 250 kg/t Stahlschlacke und Bauxit in Mengen von 200 bis 300 kg/t Stahlschlacke zugesetzt werden, wobei bei der gewählten Zugabeart eine hinreichende Homogenisierung und damit ein vollständiges Aufschmelzen und Umsetzen der Zuschläge in der Schlacke gelingt, sodaß unmittelbar ein zementtechnologisch brauchbares Produkt erzielt werden kann.

In besonders vorteilhafter Weise werden den flüssigen Schlackengemischen Feinerze bzw. Eisenoxidträger zur Einstellung eines Eisenoxidgehaltes über 8 Gew.% zugesetzt, wodurch es gelingt gleichzeitig mit der gewünschten Reduktion der Stahlschlacke auch schwer aufzuarbeitende Erze im gleichen Verfahren zu reduzieren und diesen Zusatz zur Regelung der gewünschten Umsetzungstemperatur heranzuziehen. Zum gleichen Zweck können mit Vorteil im Metallbad während des oder im Anschluß an das Frischen(s) Additive wie z.B. Kühlschrott oder Feinerze eingeschmolzen werden.

In besonders vorteilhafter Weise können Eisenoxydträger mit saurer Gangart zugesetzt werden, wodurch gleichzeitig mit der Reduktion metallischen Eisens aus derartigen Eisenoxydträgern eine entsprechende Absenkung der Basizität auf zementtechnologisch wünschenswerte Zielbasizitäten gelingt. Mit Vorteil wird hiebei so vorgegangen, daß der Zusatz von Eisenoxidträgern, wie z.B. Schwacherzen oder Feinerzen mit saurer Gangart, nach der Aufgabe der flüssigen Schlacken oder Schlackengemische auf das Stahlbad zumindest teilweise gleichzeitig mit dem Aufkohlen des Stahlbades vorgenommen wird, wobei generell mit Vorteil den flüssigen Schlacken oder Schlackengemischen CaO-, Al₂O₃- und/oder SiO₂-hältige Korrekturstoffe zugesetzt werden.

Insgesamt ergibt sich durch das in der ersten Stufe durchgeführte Frischen eine besonders günstige energetische Bilanz, wobei die beim Frischen des Roheisenbades freiwerdenden hohen Energiemengen innerhalb des Prozesses unmittelbar genutzt werden können.

Für die Einstellung der gewünschten Zielbasizität sind prinzipiell beliebige SiO₂-reiche Schlacken geeignet und es können gegebenenfalls SiO₂-hältige Korrekturstoffe eingesetzt werden.

Die Erfindung wird nachfolgend anhand eines Ausführungsbeispieles näher erläutert.

In einem Konverter wurden 8 t flüssigen Roheisens durch Einbringen von 280 Nm³ Sauerstoff über Bodendüsen in ein Stahlbad übergeführt. Das flüssige Roheisen, wies dabei einen Kohlenstoffgehalt von 3,9 Gew.%, einen Siliziumgehalt von etwa 0,3 Gew.% und Resteisen als Richtanalyse auf. Nach dem Frischen, bei welchem durch die exotherme Reaktion ausgehend von einer Badtemperatur von 1470° C eine Endtemperatur von 1620° C erreicht wurde, wies das flüssige Stahlbad einen Kohlenstoffgehalt von 0,3 Gew.%, einen Siliziumgehalt von 0,003 Gew.% und Resteisen auf. Auf dieses flüssige Stahlbad wurden in der Folge 2 t flüssiger Stahlschlacke chargiert. Die Stahlschlacke zeichnete sich durch nachfolgende Analyse aus:

| Stahlschlacke | |
|---|---|
| | Gew.% |
| CaO | 48.6 |
| SiO₂ | 19.1 |
| Al₂O₃ | 2.2 |
| MgO | 3.2 |
| TiO₂ | 1.5 |
| FeO | 22.7 |
| MnO | 2.7 |
| | |
| CaO/SiO₂ | 2.5 |

Augrund des relativ niedrigen Badkohlenstoffgehaltes des vorhandenen Stahlbades erfolgen unmittelbar im Anschluß an die Aufgabe der flüssigen Stahlschlacke wesentlich geringere Stoffumsätze bei der Reduktionsreaktion der in der Stahlschlacke enthaltenen Metalloxyde. Wenn unmittelbar Roheisen in den entsprechenden Mengenverhältnissen vorgelegt würde, würde es zu einer raschen Freisetzung von hohen CO-Mengen kommen, was zu starken Schlackenschäumen oder zu Schlackenauswurf führen könnte.

Nach der Aufgabe der Stahlschlacke auf das Stahlbad erfolgt ein Temperaturausgleich zwischen Schlacke und Metallbad, sodaß möglicherweise feste Schlackenanteile wiederum vollständig in den flüssigen Zustand übergeführt werden. Der Temperaturausgleich führt zu Temperaturen um 1500° C.

Im Anschluß an den erfolgten Temperaturausgleich wurden 580 kg Kohle mit einer Blaserate von 25 kg/min. in das Stahlbad eingeblasen, weiters wurden 370 kg Quarzsand mit einer Rate von 24 kg/min. und 535 kg Bauxit mit einer Rate von 28 kg/min. eingebracht.

Am Ende der gewünschten Reduktionsreaktion verblieb ein Metallbad mit 4,5 Gew.% gelöstem Kohlenstoff bei einer Temperatur von etwa 1490° C. Das so rückgebildete Roheisen kann naturgemäß je nach Wahl der Korrekturstoffe bzw. nach Zusammensetzung der Stahlschlacke auch entsprechend andere Metalle als Eisen enthalten.

Mit den Korrekturstoffen erfolgte zum einen die Ansteuerung der gewünschten Zielbasizität, wie sie für eine zementtechnologische Weiterverwendung der behandelten Schlacke wünschenswert erscheint, wobei gleichzeitig eine Reduktion der Metalloxyde auf die nachfolgende Richtanalyse der behandelten Stahlschlacke erfolgte.

| Behandelte Stahlschlacke | |
|---|---|
| | Gew.% |
| CaO | 44.7 |
| SiO₂ | 34.6 |
| Al₂O₃ | 14.8 |
| MgO | 2.9 |
| TiO₂ | 1.8 |
| FeO | 0.9 |
| MnO | 0.3 |
| | |
| CaO/SiO₂ | 1.3 |

Die auf diese Weise gewonnene behandelte Stahlschlacke konnte in Wasser granuliert werden und als Zumahlstoff in Kompositzementen Verwendung finden.

Durch die beim Entkohlen entstandene Wärme gelingt es, die für die Einstellung der gewünschten Zielbasizität bzw. die Einstellung der gewünschten Zusammensetzung für einen zementtechnologisch brauchbaren Zumahlstoff erforderlichen Korrekturstoffe zu erwärmen und aufzuschmelzen. Ein gegebenenfalls entstehendes unerwünscht hohes Temperaturniveau kann durch Zusatz von Kühlschrott, Feinerz oder Einsatzstoffen aus der Eisendirektreduktion (DRI, HBI) auf die gewünschte Reduktionstemperatur rückgeführt werden, wodurch weiteres Eisen in das Metallbad eingebracht werden kann.

Soweit dies erforderlich scheint, kann das bei der Reduktion gebildete Kohlenmonoxyd oberhalb des Schlackenbades nachverbrannt werden, wodurch das gleichzeitige Aufarbeiten einer größeren Menge von sauren Feinerzen ohne zusätzliches Energieeinbringen gelingt.

## Patentansprüche

1. Verfahren zum Behandeln von Schlacken oder Schlackengemischen mit einem Eisenoxidgehalt von > 5 Gew.%, insbesondere Stahlwerksschlacken, bei welchem die Stahlschlacken gegebenenfalls mit anderen Schlacken vermischt auf ein Metallbad aufgegeben werden, **dadurch gekennzeichnet, daß** als Metallbad ein Stahlbad mit einem C-Gehalt von < 1,5 Gew.%, vorzugsweise < 0,5 Gew.%, eingesetzt wird und daß das Stahlbad nach der Aufgabe der Stahlschlacken auf über 2,0 Gew.% C, vorzugsweise > 2,5 Gew.% C, durch Einbringen von Kohlenstoff oder Kohlenstoffträgern aufgekohlt wird.

2. Verfahren nach Anspruch 1, **dadurch gekennzeichnet, daß** ein Roheisenbad vorgelegt wird und mit Sauerstoff auf einen C-Gehalt von < 0,5 Gew.% gefrischt wird, wobei sich eine Badtemperatur von über 1570° C, insbesondere etwa 1620° C einstellt, daß auf das gefrischte Stahlbad flüssige Stahlschlacke aufgebracht wird und nach einem Temperaturausgleich Kohlenstoff in das Bad eingetragen wird, wobei SiO₂-hältige Korrekturstoffe, wie z.B. Hochofenschlacke, Quarzsand und/oder Al₂O₃-hältige Korrekturstoffe, wie z.B. Bauxit, zur Absenkung der Basizität auf < 1,5 bzw. zur Einstellung eines Al₂O₃-Gehaltes von > 10 Gew.% zugesetzt wird.

3. Verfahren nach Anspruch 1 oder 2, **dadurch gekennzeichnet, daß** die Basizität auf 1,1 bis 1,4 und der C-Gehalt des Bades auf > 2,5 Gew.% eingestellt wird.

4. Verfahren nach Anspruch 1, 2 oder 3, **dadurch gekennzeichnet, daß** die Stahlschlacke dem Stahlbad in einem Gewichtsmengenverhältnis von 1 : 3 bis 1 : 6, vorzugsweise etwa 1 : 4 zugesetzt wird.

5. Verfahren nach einem der Ansprüche 1 bis 4, **dadurch gekennzeichnet, daß** Quarzsand in Mengen von 150 bis 250 kg/t Stahlschlacke und Bauxit in Mengen von 200 bis 300 kg/t Stahlschlacke zugesetzt wird.

6. Verfahren nach einem der Ansprüche 1 bis 5, **dadurch gekennzeichnet, daß** den flüssigen Schlackengemischen Feinerze bzw. Eisenoxidträger zur Einstellung eines Eisenoxidgehaltes über 8 Gew.% zugesetzt werden.

7. Verfahren nach einem der Ansprüche 1 bis 6, **dadurch gekennzeichnet, daß** der Zusatz von Eisenoxidträgern, wie z.B. Schwacherzen oder Feinerzen mit saurer Gangart, nach der Aufgabe der flüssigen Schlacken oder Schlackengemische auf das Stahlbad zumindest teilweise gleichzeitig mit dem Aufkohlen des Stahlbades vorgenommen wird.

8. Verfahren nach einem der nach einem der Ansprüche 1 bis 7, **dadurch gekennzeichnet, daß** den flüssigen Schlacken oder Schlackengemischen CaO-, Al₂O₃- und/oder SiO₂-hältige Korrekturstoffe zugesetzt werden.

9. Verfahren nach einem der Ansprüche 1 bis 8, **dadurch gekennzeichnet, daß** im Metallbad während des oder im Anschluß an das Frischen(s) Additive wie z.B. Kühlschrott, Feinerze oder Eisenschwamm eingeschmolzen werden.

## Claims

1. A method for treating slags or slag mixtures having iron oxide contents of >5 wt.-%, in particular steelworks slags, in which the steel slags optionally mixed with other slags are charged onto a metal bath, **characterized in that** a steel bath having a carbon content of <1.5 wt.-%, preferably <0.5 wt.-%, is used as said metal bath and that the steel bath, after the charging of the steel slags, is carburized to above 2.0 wt.-% C, preferably >2.5 wt.-% C, by introducing carbon or carbon carriers.

2. A method according to claim 1, **characterized in that** a pig iron bath is provided and refined with oxygen to a carbon content of <0.5 wt.-%, whereby a bath temperature of above 1570°C, in particular about 1620°C, is adjusted, that liquid steel slag is charged onto the refined steel bath and carbon is introduced into the bath after a temperature equalization, wherein SiO₂-containing corrective substances such as, e.g., blast furnace slag, quartz sand and/or Al₂O₃-containing corrective substances such as, e.g., bauxite are added in order to lower the basicity to <1.5 and to adjust an Al₂O₃ content of >10 wt.-%, respectively.

3. A method according to claim 1 or 2, **characterized in that** the basicity is adjusted to 1.1. to 1.4 and the carbon content of the bath is adjusted to >2.5 wt.-%.

4. A method according to claim 1, 2 or 3, **characterized in that** the steel slag is added to the steel bath at a weight quantity ratio of 1:3 to 1:6, preferably about 1:4.

5. A method according to any one of claims 1 to 4, **characterized in that** quartz sand in amounts ranging from 150 to 250 kg/ton steel slag, and bauxite in amounts ranging from 200 to 300 kg/ton steel slag, are added.

6. A method according to any one of claims 1 to 5, **characterized in that** fine ores or iron oxide carriers are added to the molten slag mixtures in order to adjust in iron oxide content of above 8 wt.-%.

7. A method according to any one of claims 1 to 6, **characterized in that** the addition of iron oxide carriers such as, e.g., acidic gangue weak ores or fine ores, after the addition of the molten slags or slag mixtures onto the steel bath, at least partially is effected at the same time as the carburization of the steel bath.

8. A method according to any one of claims 1 to 7, **characterized in that** corrective substances containing CaO, Al₂O₃ and/or SiO₂ are added to the molten slags or slag mixtures.

9. A method according to any one of claims 1 to 8, **characterized in that** additives such as, e.g., cooling scrap, fine ores or sponge iron are melted down in the metal bath during or after refining.

## Revendications

1. Procédé de traitement de laitiers ou de mélanges de laitiers présentant une teneur en oxyde de fer > 5 % en poids, en particulier de laitiers d'aciérie, dans lequel les laitiers d'aciérie, éventuellement mélangés à d'autres laitiers, sont chargés sur un bain métallique, **caractérisé en ce que** l'on utilise en tant que bain métallique un bain d'acier présentant une teneur en C < 1,5 % en poids, de préférence < 0,5 % en poids, et **en ce que** le bain d'acier, après être chargé en laitiers d'aciérie, est cémenté à plus de 2,0 % en poids de C, de préférence > 2,5 % en poids de C, par incorporation de carbone ou de porteurs de carbone.

2. Procédé selon la revendication 1, **caractérisé en ce qu'**un bain de fonte brute est mise en oeuvre et est décarburé avec de l'oxygène jusqu'à obtenir une teneur en C < 0,5 % en poids, une température de bain supérieure à 1 570 °C, en particulier environ égale à 1 620 °C étant établie, **en ce que** l'on applique le laitier d'aciérie liquide sur le bain d'acier décarburé, et après un équilibrage de la température, on incorpore du carbone dans le bain, des substances modificatrices contenant SiO₂, comme par exemple des laitiers de haut-fourneau, du sable siliceux et/ou des substances modificatrices contenant Al₂O₃, comme par exemple de la bauxite, étant ajoutées pour réduire la basicité à < 1,5 ou pour régler une teneur en Al₂O₃ > 10 % en poids.

3. Procédé selon la revendication 1 ou 2, **caractérisé en ce que** la basicité est réglée entre 1,1 et 1,4 et **en ce que** la teneur en C du bain est réglée à > 2,5 % en poids.

4. Procédé selon la revendication 1, 2 ou 3, **caractérisé en ce que** les laitiers d'aciérie sont ajoutés au bain d'acier selon un rapport de quantité en poids compris entre 1:3 et 1,6, de préférence égal à environ 1:4.

5. Procédé selon l'une des revendications 1 à 4, **caractérisé en ce qu'**on ajoute du sable siliceux dans des quantités comprises entre 150 et 250 kg/t du laitier d'aciérie et de la bauxite dans des quantités comprises entre 200 et 300 kg/t du laitier d'aciérie.

6. Procédé selon l'une des revendications 1 à 5, **caractérisé en ce que** l'on ajoute aux mélanges de laitiers liquides des fines de minerai ou des porteurs d'oxyde de fer pour régler la teneur en oxyde de fer à une valeur supérieure à 8 % en poids.

7. Procédé selon l'une des revendications 1 à 6, **caractérisé en ce que** l'ajout de porteurs d'oxyde de fer, comme par exemple de minerai pauvre ou de fines de minerai à gangue acide, est réalisé après l'apport des laitiers liquides ou des mélanges de laitiers sur le bain d'acier au moins partiellement simultanément à la cémentation du bain d'acier.

8. Procédé selon l'une des revendications 1 à 7, **caractérisé en ce que** l'on ajoute aux laitiers ou mélanges de laitiers liquides des substances modificatrices contenant CaO, Al₂O₃ et/ou SiO₂.

9. Procédé selon l'une des revendications 1 à 8, **caractérisé en ce que** l'on fond dans le bain métallique, pendant ou après la décarburation, des additifs comme par exemple des ferrailles de refroidissement, des fines de minerai ou de l'éponge de fer.
